# EUROPÄISCHE PATENTSCHRIFT

(11) **EP 1 900 568 B1**
(45) Veröffentlichungstag und Bekanntmachung des Hinweises auf die Patenterteilung: **02.11.2011**
(21) Anmeldenummer: 07114185.7
(22) Anmeldetag: 10.08.2007
(51) Int. Cl.: B60N 3/02

(54) **Handstange**
Hand pole
Barre de maintien

(30) Priorität: 18.09.2006 DE 202006014468 U
(43) Veröffentlichungstag der Anmeldung: 19.03.2008
(73) Patentinhaber: Bombardier Transportation GmbH, 10785 Berlin (DE)
(72) Erfinder: Michel, Nicole, 14469 Potsdam (DE); Lange, Thomas, 13088 Berlin (DE)
(74) Vertreter: Cohausz & Florack

(56) Entgegenhaltungen:
- EP-A- 0 688 919
- DE-A1-102005 040 860
- DE-U1- 29 913 289
- JP-A- 11 117 485

## Beschreibung

Die Erfindung betrifft eine Handstange für Fahrzeuge des öffentlichen Personenverkehrs nach dem Oberbegriff des Anspruchs 1, sowie ein Fahrzeug, insbesondere Schienenfahrzeug für den öffentlichen Personenverkehr mit einer entsprechenden Handstange.

Fahrzeuge des öffentlichen Personenverkehrs sind üblicherweise mit vertikal und/oder horizontal verlaufenden Handstangen ausgestattet, an denen sich Fahrgäste während der Fahrt festhalten können. Herkömmliche Handstangen dieser Art sind vollständig aus Edelstahl- oder Leichtmetallhohlprofilen hergestellt, die entweder über ihre gesamte Länge eine einheitliche optische und haptische Oberflächenbeschaffenheit aufweisen oder teilweise mit einer kontrastierenden Farbgebung versehen sind. Zweck dieser kontrastierenden Farbgebung ist eine bessere optische Orientierung für Passagiere, insbesondere für Passagiere mit Sehbehinderung.

Passagieren ohne Sehvermögen bietet die kontrastierende Farbgebung der Handstangen jedoch keine Orientierungshilfe. Darüber hinaus besteht das Problem, dass bei Ausfall der Innenbeleuchtung während Nacht- oder Tunnelfahrten die Handstangen für alle Passagiere nicht mehr erkennbar sind.

Das Dokument DE 299 13 289 U1 offenbart eine Handstange oder ein Haltestangensystem für öffentliche Verkehrsmittel, insbesondere für Busse und Bahnen. Das Handstangensystem besteht aus Strangpressprofilen aus Aluminium, die über Adapter an den Fahrzeugboden, die Fahrzeugdecke und die Fahrzeugwände angebracht sind. Die Strangpressprofile können mithilfe eines Einsteck- bzw. Ineinandersteckteiles miteinander verbunden werden. Auf das Einsteck- bzw. Ineinandersteckteil kann zudem ein Druckschalter und/oder ein Prallschutz aufgesetzt werden. Der Prallschutz, der aus einem anderen Material gefertigt ist als die Strangpressprofile, ist zwischen den Enden der Strangpressprofile angeordnet. Dasselbe trifft auf die Anordnung des Druckschalters zu. Nachteilig an diesem bekannten Handstangensystem ist, dass die Handstangen bei Ausfall der Innenbeleuchtung des Verkehrsmittels während Nacht- oder Tunnelfahrten nicht mehr für alle Passagiere erkennbar sind.

Im Stand der Technik sind zwar auch Handstangen für öffentliche Verkehrsmittel bekannt, die mit Leuchtmitteln versehen sind.

So offenbart beispielsweise das Dokument EP-A-0 688 919 einen Bausatz, insbesondere für Busse, aus abgelängten Rohrabschnitten gleichen Durchmessers, bestehend unter anderem aus Haltestangen, Handlaufstangen, Handlaufstützen und Verbindungsstangen. Diese Bauelemente sind über Zapfen miteinander und/oder mit der Decke des Busses verbunden. Ferner umfasst dieser Bausatz Eckstücke, um 45°- bzw. 90°-Winkel zu realisieren. Die Eckstücke sind auf die Enden der Verbindungsstangen aufgebracht. Es ist möglich, in einen Formkörperhohlraum des Eckstückes eine Lichtquelle anzuordnen. Der Formkörperhohlraum ist dabei mit einem Abdeckelement aus einem lichtdurchlässigen Material abgedeckt.

Das Dokument JP 11 117485 A zeigt eine Handstange als Innenausstattung für ein Fahrzeug. Die Handstange besteht aus Metallrohren, die jeweils mit einem Prallschutz ummantelt sind. Die Prallschutzelemente werden auf die Metallrohre aufgezogen und sind mit lichtemittierenden Mitteln ausgestattet, die aus fluoreszierender Farbe, selbstleuchtender Farbe, elektrolumineszierenden Elementen, LEDs, Lichtwellenleiter oder Lampen bestehen könnten.

Vor diesem Hintergrund liegt der vorliegenden Erfindung die Aufgabe zugrunde, Handstangen für Fahrzeuge des öffentlichen Personenverkehrs zu schaffen, die eine bessere Orientierung für Passagiere mit Sehbehinderung und eine optimale Orientierung für Passagiere mit normalem Sehvermögen bei Dunkelheit bieten. Insbesondere soll ein mit entsprechenden Handstangen ausgestattetes Fahrzeug für den öffentlichen Personenverkehr zur Verfügung gestellt werden.

Gelöst wird diese Aufgabe durch eine Handstange mit den Merkmalen des Anspruchs 1.

Die erfindungsgemäße Handstange weist mindestens zwei axial miteinander verbundene Stangensegmente auf, die sich bezüglich ihres Werkstoffes und/oder ihrer Oberflächenbeschaffenheit voneinander sowohl in optischer als auch in haptischer Hinsicht unterscheiden.

Die haptische Kontrastierung kann dabei beispielsweise durch Verwendung eines aus Holz, Kunststoff und/oder Gummi gefertigten Stangensegments erzielt werden, während das mindestens eine damit verbundene Stangensegment in üblicher Weise aus Metall, insbesondere aus Edelstahl oder Leichtmetall gefertigt ist.

Alternativ oder ergänzend kann die haptische Kontrastierung der erfindungsgemäßen Handstange auch dadurch erzielt werden, dass mindestens eines der Stangensegmente eine glatte Oberfläche aufweist, während mindestens ein weiteres, daran anschließendes Stangensegment eine aufgerauhte Oberfläche aufweist. Beispielsweise kann mindestens eines der Stangensegmente eine Oberfläche aufweisen, die eine Rauhtiefe von weniger als 10 µm, vorzugsweise weniger als 6 µm besitzt, während mindestens ein weiteres, daran anschließendes Stangensegment eine Oberfläche aufweist, die eine Rauhtiefe im Bereich von 10 µm bis 900 µm, vorzugsweise im Bereich von 100 µm bis 900 µm besitzt. Die relativ hohe Rauhtiefe kann dabei beispielsweise durch Sandstrahlen, Bürsten oder dergleichen erzeugt werden.

Ferner ist es für eine gute optische Orientierung für Passagiere mit normalem Sehvermögen zweckmäßig, wenn sich die Stangensegmente der erfindungsgemäßen Handstange nach einer weiteren Ausgestaltung auch bezüglich ihrer Farbgebung voneinander unterscheiden.

Ein weiteres vorteilhaftes Merkmal der erfindungsgemäßen Handstange besteht darin, dass sie mindestens ein ringförmiges Element aufweist, das bei Dunkelheit aktiv oder passiv leuchtet. Bei Ausfall der Innenbeleuchtung ist die Handstange mit integrierter passiver oder aktiver Beleuchtung für all die Passagiere sichtbar, die über ein normales Sehvermögen verfügen. Ein solches ringförmiges Element der Handstange kann beispielsweise aus fluoreszierendem Material gefertigt sein oder eine fluoreszierende Oberflächenbeschichtung aufweisen.

Als bei Dunkelheit aktiv leuchtendes Stangensegment wird beispielsweise ein Stangensegment mit integrierten Leuchtdioden, insbesondere ein organische Leuchtdioden aufweisendes Stangensegment verwendet.

Die axiale Verbindung der Stangensegmente miteinander ist vorzugsweise als Steck-, Rast- oder Schraubverbindung ausgeführt.

Weitere bevorzugte und vorteilhafte Ausgestaltungen der Erfindung sind in den Unteransprüchen angegeben.

Nachfolgend wird die Erfindung anhand einer mehrere Ausführungsbeispiele darstellenden Zeichnung näher erläutert. Es zeigen:
- Fig. 1: einen Abschnitt einer erfindungsgemäßen Handstange in perspektivischer Ansicht;
- Fig. 2: die Handstange der Fig. 1, wobei die Stangensegmente teilweise in Explosionsdarstellung gezeigt sind;
- Fig. 3: einen Abschnitt eines Fahrgastraumes eines Schienenfahrzeuges für den öffentlichen Personenverkehr mit erfindungsgemäßen Handstangen; und
- Fig. 4: einen Abschnitt eines Fahrgastraumes eines weiteren Schienenfahrzeuges für den öffentlichen Personenverkehr mit einer erfindungsgemäßen Handstange.

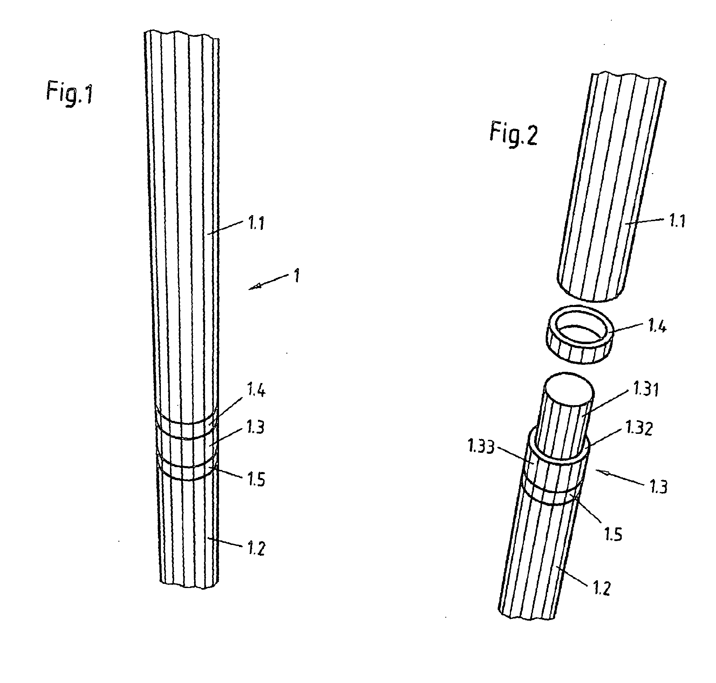

Die in den Figuren 1 und 2 dargestellte Handstange 1 ist in mehrere Segmente unterteilt, von denen ein Teil in üblicher Weise beispielsweise aus Edelstahl- oder Leichtmetallhohlprofilen 1.1, 1.2 besteht, während weitere Segmente 1.3, 1.4, 1.5 demgegenüber aus in Farbgebung, Oberflächenstruktur und/oder Material optisch und haptisch kontrastierend ausgebildet sind.

Die aus Edelstahl oder Leichtmetall bestehenden Stangensegmente 1.1, 1.2 weisen an ihren Enden jeweils eine axiale Aufnahme auf, in die ein Einsteckende 1.31 eines relativ kurzen Stangensegments 1.3 formschlüssig einsteckbar ist. Die Stangensegmente 1.1, 1.2 sind aus einem kreiszylindrischen Rohrprofil gebildet, während das Stangensegment 1.3 aus einem Vollprofil gebildet ist. Das Stangensegment 1.3 ist beispielsweise aus Holz, Kunststoff oder Gummi gefertigt und weist an beiden Enden ein Einsteckende 1.31 auf, das jeweils durch einen an dem Stangensegment 1.3 ausgebildeten Absatz 1.32 definiert ist.

Das kurze Stangensegment 1.3 hat einschließlich seiner Einsteckenden 1.31 eine axiale Länge im Bereich von 15 cm bis 25 cm. Die axiale Länge des im montierten Zustand der Handstange 1 sichtbaren Abschnitts 1.33 des Stangensegments 1.3 liegt beispielsweise im Bereich von 4 cm bis 8 cm.

Das Stangensegment 1.3 ist vorzugsweise so dimensioniert, dass im montierten Zustand seine Mantelfläche bündig mit den Mantelflächen der Stangensegmente 1.1, 1.2 verläuft. Es ist jedoch auch möglich, den Durchmesser des mittleren Abschnitts 1.33 des Stangensegments 1.3 geringfügig größer oder geringfügig kleiner als den Außendurchmesser der Stangensegmente 1.1, 1.2 zu dimensionieren. Ein sich hierdurch ergebender kleiner Absatz an der Handstange kann als zusätzliches haptisch wahrnehmbares Strukturmerkmal dienen.

Wie in den Figuren 1 und 2 dargestellt, sind zwischen den Stangensegmenten 1.1, 1.2, 1.3 ringförmige Elemente 1.4, 1.5 angeordnet, wobei das jeweilige Element auf eines der Einsteckenden 1.31 des Stangensegments 1.3 formschlüssig aufgesteckt ist. Die ringförmigen Elemente 1.4, 1.5 sind aus fluoreszierendem Material gefertigt oder weisen eine fluoreszierende Oberflächenbeschichtung auf. Die Elemente 1.4, 1.5 stellen somit passive Leuchtelemente dar.

Es ist zu erkennen, dass die Stangensegmente 1.1, 1.2, 1.3 und die ringförmigen Leuchtelemente 1.4, 1.5 im montierten Zustand bündig zueinander verlaufende Mantelflächen aufweisen.

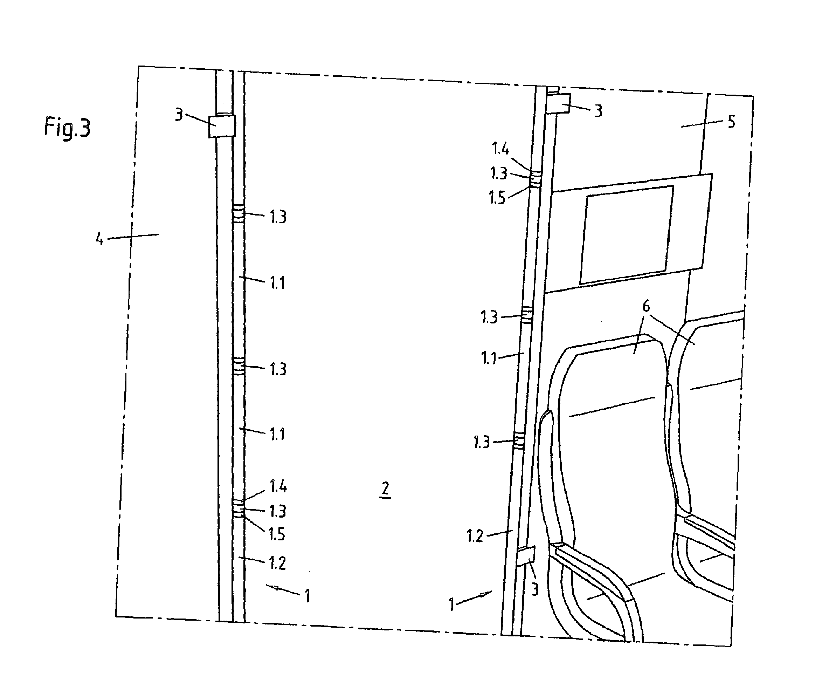

In Fig. 3 ist ein Abschnitt eines Fahrgastraumes eines Schienenfahrzeuges für den öffentlichen Personenverkehr gezeigt. Der Fahrgastraum besitzt einen Ausgang oder Durchgang 2, der durch zwei erfindungsgemäße Handstangen 1 begrenzt ist. Die vertikal verlaufenden Handstangen 1 sind über Halterungen 3 mit Wandelementen 4, 5 verbunden. Die Halterungen 3 sind dabei als Abstandshalter ausgeführt, so dass zwischen der jeweiligen Handstange 1 und dem daran befestigten Wandelement 4, 5 eine schmale Öffnung verbleibt, die einem Fahrgast ein ungehindertes Umgreifen der Handstange 1 ermöglicht. Die rechte Handstange ist neben zwei Fahrgastsitzen 6 angeordnet.

Die Längen der als Hohlprofile ausgeführten Stangensegmente 1.1, 1.2, welche beispielsweise aus Edelstahl oder Leichtmetall bestehen, sind so bemessen, dass die dazu in Farbgebung, Oberflächenstruktur und/oder Material optisch sowie haptisch kontrastierend ausgebildeten Stangensegmente 1.3 in einer Höhe im Bereich von 60 bis 180 cm oberhalb des Fußbodens des Fahrgastraumes des Fahrzeuges angeordnet sind. In dem in Fig. 3 dargestellten Ausführungsbeispiel weist jede der beiden Handstangen 1 drei relativ kurze Stangensegmente 1.3 und sechs bei Dunkelheit leuchtende Ringelemente 1.4, 1.5 auf, die dem in Fig. 2 dargestellten Stangensegment 1.3 bzw. Leuchtelement 1.4, 1.5 entsprechen.

Die zwischen den ringförmigen Leuchtelementen 1.4, 1,5 angeordneten Stangensegmente (Hohlprofile) 1.1 weisen die gleiche Länge auf.

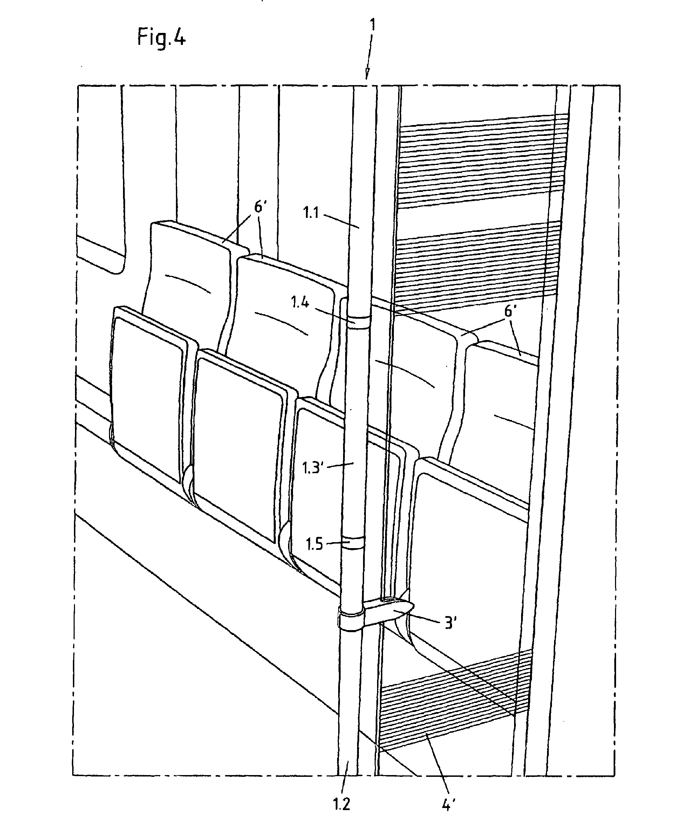

In Fig. 4 ist eine erfindungsgemäße Handstange 1 gezeigt, deren Stangensegmente aus zwei Edelstahl- oder Leichtmetall-Hohlprofilen 1.1, 1.2 und einem Holzstangensegment (Vollprofil) 1.3' bestehen. Das Holzstangensegment 1.3' ist entsprechend dem in Fig. 2 dargestellten Stangensegment 1.3 über im Durchmesser reduzierte Einsteckenden in die zugeordneten Enden der aus Hohlprofilen bestehenden Stangensegmente 1.1, 1.2 formschlüssig eingesteckt.

Im Vergleich zu dem in Fig. 2 dargestellten Ausführungsbeispiel ist das zwischen den Hohlprofilen angeordnete Stangensegment 1.3' gemäß Fig. 4 relativ lang. Die axiale Länge seines im montierten zustand sichtbaren Abschnitts liegt beispielsweise im Bereich von 30 cm bis 50 cm.

Entsprechend dem in Fig. 2 dargestellten Ausführungsbeispiel sind auch hier zwischen dem im montierten Zustand sichtbaren Abschnitt des Stangensegments 1.3' und den metallischen Stangensegmenten (Rohrprofilen) 1.1, 1.2 ringförmige Elemente angeordnet 1.4, 1.5, die bei Dunkelheit leuchten.

Das untere Rohrprofil 1.2 der vertikal angeordneten Handstange 1 ist über eine zweiteilige Klemmhalterung 3' mit einer aus gehärtetem Glas gefertigten Trennwand 4' verbunden, wobei die Klemmhalterung 3' wiederum als Abstandshalter bezüglich der Trennwand 4' ausgeführt ist. Neben der Trennwand 4' ist eine herunter klappbare Sitzflächen aufweisende Sitzreihe 6' an der Längsseitenwand des Fahrgastraumes montiert.

Die Ausführung der Erfindung ist nicht auf die vorstehend beschriebenen Ausführungsbeispiele beschränkt. Vielmehr sind zahlreiche Varianten möglich, die auch bei abweichender Gestaltung von dem in den Ansprüchen angegebenen Erfindungsgedanken Gebrauch machen. So kann beispielsweise die erfindungsgemäße Handstange 1 nicht nur gerade sondern auch bogenförmig ausgeführt sein.

Ferner kann die erfindungsgemäße Handstange auch in der Weise ausgeführt werden, dass mindestens zwei ihrer Stangensegmente als Hohlprofile ausgebildet und wie Perlen auf einer Schnur auf einem länglichen Stabelement "aufgefädelt" bzw. aufgeschoben sind. Die als Hohlprofile ausgebildeten Stangensegmente sind dabei in Farbgebung, Oberflächenstruktur und/oder Material optisch und haptisch kontrastierend ausgebildet und aneinandergereiht, an ihren Stirnseiten aneinanderstoßend auf dem Stabelement aufgeschoben. Zwischen den Hohlprofilen aus Metall, Kunststoff und/oder Gummi sind dann wiederum ringförmige Elemente 1.4, 1.5 auf dem Stabelement angeordnet.

## Patentansprüche

1. Handstange für Fahrzeuge des öffentlichen Personenverkehrs, mit mindestens zwei axial miteinander verbundenen Stangensegmenten (1.1, 1.2, 1.3), die sich bezüglich ihres Werkstoffes und/oder ihrer Oberflächenbeschaffenheit voneinander sowohl in optischer als auch in haptischer Hinsicht unterscheiden, wobei mindestens eines der Stangensegmente (1.1, 1.2) an mindestens einem seiner Enden eine axiale Aufnahme aufweist, und dass mindestens ein weiteres der Stangensegmente (1.3, 1.3') mindestens ein in die Aufnahme formschlüssig einsteckbares Einsteckende (1.31) aufweist, das durch einen am Stangensegment (1.3, 1.3') ausgebildeten Absatz (1.32) definiert ist,
**dadurch gekennzeichnet, dass** zwischen dem die Aufnahme aufweisenden Stangensegment (1.1, 1.2) und dem mindestens ein Einsteckende (1.31) aufweisenden Stangensegment (1.3, 1.3') mindestens ein ringförmiges Leuchtelement (1.4, 1.5) angeordnet ist, das auf das Einsteckende (1.31) aufgesteckt ist, wobei die Stangensegmente (1.1, 1.2, 1.3) und das ringförmige Leuchtelement (1.4, 1.5) im montierten Zustand bündig zueinander verlaufende Mantelflächen aufweisen.

2. Handstange nach Anspruch 1,
**dadurch gekennzeichnet, dass** sich die Stangensegmente (1.1, 1.2, 1.3) auch bezüglich ihrer Farbgebung voneinander unterscheiden.

3. Handstange nach Anspruch 1 oder 2,
**dadurch gekennzeichnet, dass** mindestens eines der Stangensegmente (1.1, 1.2) aus Metall, insbesondere aus Edelstahl oder Leichtmetall gefertigt ist, während mindestens ein weiteres, daran anschließendes Stangensegment (1.3) aus Holz, Kunststoff und/oder Gummi gefertigt ist.

4. Handstange nach einem der Ansprüche 1 bis 3,
**dadurch gekennzeichnet, dass** mindestens eines der Stangensegmente (1.1, 1.2) eine glatte Oberfläche aufweist, während mindestens ein weiteres, daran anschließendes Stangensegment (1.3) eine aufgerauhte Oberfläche aufweist.

5. Handstange nach einem der Ansprüche 1 bis 4,
**dadurch gekennzeichnet, dass** mindestens eines der Stangensegmente (1.1, 1.2) eine Oberfläche aufweist, die eine Rauhtiefe von weniger als 10 µm, vorzugsweise weniger als 6 µm besitzt, während mindestens ein weiteres, daran anschließendes Stangensegment (1.3) eine Oberfläche aufweist, die eine Rauhtiefe im Bereich von 10 µm bis 900 µm, vorzugsweise im Bereich von 100 µm bis 900 µm besitzt.

6. Handstange nach einem der Ansprüche 1 bis 5,
**dadurch gekennzeichnet, dass** die Stangensegmente ein Stangensegment (1.3) umfassen, das aktiv oder passiv leuchtet.

7. Handstange nach einem der Ansprüche 1 bis 6,
**dadurch gekennzeichnet, dass** mindestens zwei der Stangensegmente als Hohlprofile ausgebildet sind und aneinandergereiht, an ihren Stirnseiten aneinanderstoßend auf einem länglichen Stabelement aufgeschoben sind.

8. Handstange nach einem der Ansprüche 1 bis 7,
**dadurch gekennzeichnet, dass** das die Aufnahme aufweisende Stangensegment (1.1, 1.2) aus einem Rohrprofil, vorzugsweise einem kreiszylindrischen Rohrprofil gebildet ist.

9. Handstange nach einem der Ansprüche 1 bis 8,
**dadurch gekennzeichnet, dass** das mindestens ein Einsteckende (1.31) aufweisende Stangensegment (1.3) aus einem Vollprofil gebildet ist.

10. Handstange nach einem der Ansprüche 1 bis 9,
**dadurch gekennzeichnet, dass** das mindestens ein Einsteckende (1.31) aufweisende Stangensegment (1.3) an seinem anderen Ende ein zweites entsprechendes Einsteckende aufweist.

11. Handstange nach einem der Ansprüche 1 bis 10,
**dadurch gekennzeichnet, dass** das ringförmige Leuchtelement (1.4, 1.5) aus fluoreszierendem Material gefertigt ist oder eine fluoreszierende Oberflächenbeschichtung aufweist.

12. Fahrzeug für den öffentlichen Personenverkehr, insbesondere in Form eines Schienenfahrzeuges, mit einer Handstange (1) gemäß einem der Ansprüche 1 bis 11.

13. Fahrzeug nach Anspruch 12,
**dadurch gekennzeichnet, dass** die Handstange (1) im Wesentlichen vertikal verläuft, wobei ein aus Holz, Kunststoff und/oder Gummi gefertigtes Stangensegment (1.3) und/oder ein aktiv oder passiv leuchtendes Stangensegment (1.3, (1.4, 1.5) in einer Höhe im Bereich von 60 cm bis 180 cm oberhalb des Fußbodens des Fahrgastraumes des Fahrzeuges angeordnet ist.

## Claims

1. A handrail for public transport vehicles comprising at least two rod parts (1.1, 1.2, 1.3) which are axially connected to one another and which differ with respect to their material and/or their surface structure from an optical as well as a haptical point of view, at least one of the rod parts having an axial seat in at least one of its ends, and wherein at least one further rod part of the rod parts (1.3, 1.3') has at least one insertion piece (1.31) which can be inserted into the seat in a positive fit, said insertion piece being defined by a shoulder (1.32) formed on the rod part (1.3, 1.3'),
**characterized in that** at least one luminous annular element (1.4, 1.5) is arranged between the rod part (1.1, 1.2) having the seat and the rod part (1.3, 1.3') having at least one insertion piece, which annular member is fit onto the insertion piece (1.31), the rod parts (1.1, 1.2, 1.3) and the luminous annular member (1.4, 1.5) having circumferential surfaces which are flush with one another in their assembled state.

2. The handrail according to claim 1,
**characterized in that** the rod parts (1.1, 1.2, 1.3) differ also with respect to their coloring.

3. The handrail according to claim 1 or 2,
**characterized in that** at least one of the rod parts (1.1, 1.2) is made of metal, in particular of high-grade steel or light metal, while at least one additional adjoining rod part (1.3) is made of wood, plastics and/or rubber.

4. The handrail according to one of claims 1 to 3, **characterized in that** at least one of the rod parts (1.1, 1.2) has a smooth surface while at least one additional adjoining rod part (1.3) has a roughened surface.

5. The handrail according to one of claims 1 to 4, **characterized in that** at least one of the rod parts (1.1, 1.2) comprises a surface having a surface roughness of less than 10 µm, preferably less than 6 µm, while at least one additional adjoining rod part (1.3) comprises a surface having a surface roughness in the range of 10 µm to 900 µm, preferably in the range of 100 µm to 900 µm.

6. The handrail according to one of claims 1 to 5, **characterized in that** the rod parts comprise a rod part (1.3) which is actively or passively luminous.

7. The handrail according to one of claims 1 to 6, **characterized in that** at least two of the rod parts are formed as hollow sections, which are pushed onto an elongated bar member with their end faces in abutment.

8. The handrail according to one of claims 1 to 7, **characterized in that** the rod part (1.1, 1.2) having the seat is made of a tubular section, preferably a tubular section in the form of a circular cylinder.

9. The handrail according to one of claims 1 to 8, **characterized in that** the rod part (1.3) comprising the at least one insertion piece (1.31) is made of a solid section.

10. The handrail according to one of claims 1 to 9, **characterized in that** the rod part (1.3) comprising the at least one insertion piece (1.31) has a second corresponding insertion piece on its other end.

11. The handrail according to one of claims 1 to 10, **characterized in that** the luminous annular element (1.4, 1.5) is made of fluorescent material or has a fluorescent surface coating.

12. A public transport vehicle, in particular in the form of a rail vehicle, with a handrail (1) according to one of claims 1 to 11.

13. The vehicle according to claim 12,
**characterized in that** the handrail (1) extends substantially vertical, wherein a rod part (3) made of wood, plastics and/or rubber and/or an actively or passively luminous rod part (1.3, 1.4, 1.5) is arranged at a height in the range of 60 cm to 180 cm above the floor of the passenger compartment of the vehicle.

## Revendications

1. Barre de maintien pour véhicules automobiles de transport en commun, qui est dotée d'au moins deux segments de barre (1.1, 1.2, 1.3), qui se distinguent l'un de l'autre, au point de vue optique tout comme au point de vue haptique, par leur matériau et / ou par la structure de leur surface, sachant que l'un des segments de barre (1.1, 1.2, 1.3), au moins, est doté, à au moins l'une de ses extrémités, d'un réceptacle axial, et qu'au moins un autre segment de barre (1.3, 1.3') est doté d'au moins une extrémité (1.31), qui, pouvant être insérée, en engagement géométrique, dans le réceptacle, est définie par un talon (1.32), qui est formé sur le segment de barre (1.3, 1.3'), **caractérisé en ce que**, entre le segment de barre (1.1, 1.2), qui est doté du réceptacle, et le segment de barre (1.3, 1.3'), qui présente au moins une extrémité insérable (1.31), est disposé au moins un élément lumineux (1.4, 1.5) en forme de bague, qui est enfilé sur l'extrémité insérable (1.31), sachant que les segments de barre (1.1, 1.2, 1.3) et l'élément lumineux en forme de bague (1.4, 1.5) présentent des surfaces latérales, qui sont en alignement à niveau, l'une par rapport à l'autre dans état de montage.

2. Barre de maintien selon la revendication 1, **caractérisée en ce que** les segments de barre (1.1, 1.2, 1.3) diffèrent aussi les uns des autres par leurs coloris.

3. Barre de maintien selon revendication 1 ou 2, **caractérisée en ce qu'**au moins l'un des segments de barre (1.1, 1.2) est fabriqué en métal, en particulier en acier inoxydable ou en métal léger, tandis qu'au moins un autre segment (1.3) adjacent est fabriqué en bois, en matière plastique et / ou en caoutchouc.

4. Barre de maintien selon l'une des revendications 1 à 3, **caractérisée en ce qu'**au moins l'un des segments de barre (1.1, 1.2) présente une surface lisse, tandis qu'au moins un autre segment (1.3) adjacent présente une surface rugueuse.

5. Barre de maintien selon l'une des revendications 1 à 4, **caractérisée en ce qu'**au moins l'un des segments de barre (1.1, 1.2) est doté d'une surface, qui présente une profondeur de rugosité de moins de 10 µm, de préférence de moins de 6 µm, tandis qu'au moins un autre segment (1.3) adjacent est doté d'une surface, qui présente une profondeur de rugosité située dans une gamme de 10 µm à 900 µm, de préférence dans une gamme de 100 µm à 900 µm.

6. Barre de maintien selon l'une des revendications 1 à 5, **caractérisée en ce que** les segments de barre comprennent un segment de barre (1.3), qui luit activement ou passivement.

7. Barre de maintien selon l'une des revendications 1 à 6, **caractérisée en ce qu'**au moins deux des segments de barre sont réalisés en forme de profilés creux et alignés les uns aux autres, bout à bout par leurs faces frontales et glissés sur un élément allongé en forme de barre.

8. Barre de maintien selon l'une des revendications 1 à 7, **caractérisée en ce que** le segment de barre (1.1, 1.2), doté du réceptacle, est formé par un profilé tubulaire, de préférence par un profilé tubulaire, cylindrique.

9. Barre de maintien selon l'une des revendications 1 à 8, **caractérisée en ce que** le segment de barre (1.3), qui présente au moins une extrémité insérable (1.31), est formé par un profilé plein.

10. Barre de maintien selon l'une des revendications 1 à 9, **caractérisée en ce que** le segment de barre (1.3), qui présente au moins une extrémité insérable (1.31), est dotée, à son autre extrémité, d'une deuxième extrémité insérable correspondante.

11. Barre de maintien selon l'une des revendications 1 à 10, **caractérisée en ce que** l'élément lumineux en forme de bague (1.4, 1.5) est fabriqué en matière fluorescente ou est doté d'un revêtement de surface fluorescent.

12. Véhicule automobile de transport en commun, en particulier de type véhicule sur rails, qui est doté d'une barre de maintien (1) selon l'une des revendications 1 à 11.

13. Véhicule automobile selon la revendication 12, **caractérisé en ce que** la barre de maintien (1) s'étend essentiellement verticalement, sachant qu'un segment de barre (1.3), fabriqué en bois, en matière synthétique et / ou en caoutchouc, et / ou un segment de barre lumineux activement ou passivement (1.3, 1.4, 1.5) est installé à une hauteur de 60 cm à 180 cm au-dessus du sol de l'espace réservé aux usagers du véhicule automobile.
